# EUROPÄISCHE PATENTSCHRIFT

(11) **EP 0 861 765 B1**
(45) Veröffentlichungstag und Bekanntmachung des Hinweises auf die Patenterteilung: **17.11.1999**
(21) Anmeldenummer: 97122165.0
(22) Anmeldetag: 16.12.1997
(51) Int. Cl.: B62D 21/15

(54) **Fahrschemel**
Subframe
Châssis auxiliaire

(30) Priorität: 26.02.1997 DE 19707568
(43) Veröffentlichungstag der Anmeldung: 02.09.1998
(73) Patentinhaber: Dr.Ing.h.c. F. Porsche Aktiengesellschaft, 70435 Stuttgart (DE)
(72) Erfinder: Söffge, Friedhelm, 71229 Leonberg (DE); Baumann, Hans-Uwe, 70437 Stuttgart (DE)

(56) Entgegenhaltungen:
- EP-A- 0 393 397
- EP-A- 0 603 536
- DE-A- 1 925 975
- DE-B- 1 111 038
- DE-C- 3 905 650

## Beschreibung

Die Erfindung bezieht sich auf einen Fahrschemel für eine Hinterradaufhängung eines Kraftfahrzeuges.

Ein Fahrschemel nach dem Oberbegriff des Anspruchs 1 ist in der EP 393 397 A offenbart.

Aus der DE 39 05 650 C2 sind mit Längs- und Querträgern des Fahrzeugaufbaus starr verbundene Diagonalstreben bekannt, die eine Karosseriefestigkeit bewirken sollen. Desweiteren ist aus der DE 43 13 785 A1 eine Aufpralleinrichtung bekannt, die an Aufbaulängsträgern angeordnete Übertragungsnasen aufweist, welche mit Aufprallelementen eines Antriebsaggregats zusammenwirken, um einen Deformationsweg zu vermindern.

Die Aufgabe der Erfindung besteht darin, einen Fahrschemel für eine Hinterradaufhängung eines Kraftfahrzeuges zu schaffen, der eine Aussteifung des Hinterwagens sowie eine Abstützung bei einem Crashfall gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß bei einem Fahrzeug mit einem Heckmotor und einem - in bezug auf die Fahrtrichtung - davor angeordneten Fahrschemel zur Anlenkung einer Hinterradaufhängung im Crashfall die Aufnahme von Kräften über Diagonalstreben gewährleistet ist und darüber hinaus der über elastische Lager am Fahrzeugaufbau abgestützte Fahrschemel ausgesteift wird.

Die Diagonalstreben können je nach Anwendungsfall entweder elastisch, berührungsfrei oder fest oder in Kombination dieser Befestigungsarten über Stehbolzen mit Seitenträgern des Fahrschemels verbunden sein, wobei die freien Enden jeweils am Fahrschemel-Querträger und an äußeren Längsträgern bzw. Fahrzeugaufbauteilen befestigt sind.

Die Streben sind von hinten nach vorne - in bezug auf die Fahrtrichtung - divergierend angeordnet, so daß bei einem Heckcrash die Streben zusätzlich Kräfte aufnehmen können, welche vom Motor kommend über die Streben an die Karosserie weitergeleitet bzw. durch Verformungsarbeit in den Streben abgebaut werden. Damit die Streben bei Belastung nicht vorzeitig ausknicken können und somit ausfallen, sind diese über die Stehbolzen am Seitenteil des Fahrschemels gehalten, welche über ihre Köpfe eine sogenannte Fangfunktion bewirken.

Die Diagonalstreben sind V-förmig ausgerichtet und vorzugsweise jeweils mit dem hinteren freien Ende im Abstand zur Fahrzeuglängsmittenebene am Fahrschemel-Querträger angeordnet. Die Stehbolzen sind entweder an den Diagonalstreben oder an den Seitenträgern des Fahrschemels vorgesehen. Dies ist im wesentlichen abhängig von der Montage und den Herstellungskosten.

Die Verbindung der Stehbolzen mit den Seitenträgern bzw. mit den Diagonalstreben kann berührungslos erfolgen, derart, daß zwischen den Stehbolzen und dem zu verbindenden Element, wie beispielsweise den Seitenträgern oder den Diagonalstreben, ein Luftspiel in radialer und vertikaler Richtung vorhanden ist. Desweiteren können die Stehbolzen unter Zwischenschaltung von elastischen Mitteln, wie beispielsweise elastischen Hülsen mit dem zu verbindenden Element, wie beispielsweise den Seitenträgern oder den Diagonalstreben verbunden sein, um eine akustische Abkopplung bei elastischen Bewegungen des Fahrschemels zu erzielen. Desweiteren kann jede Diagonalstrebe im vorderen Befestigungspunkt - in bezug auf die Fahrtrichtung - jeweils in einem elastischen Lager abgestützt sein. Auch ist es denkbar, daß die Diagonalstreben im vorderen Befestigungspunkt über den Stehbolzen starr verschraubt ist und der weitere Stehbolzen mit einer elastischen Hülse versehen ist und der Kopf des Stehbolzens zur Hülse beabstandet angeordnet wird.

Die elastischen Hülsen auf wenigstens einem Stehbolzen können in der Weise angeordnet und ausgebildet sein, daß diese entweder auch im Zwischenraum zwischen der Diagonalstrebe und dem Seitenträger mit einem Ringwulst angeordnet sind und quasi eine elastische Abstützung ergeben oder aber diese elastische Abstützung entfällt und die elastische Hülse weist eine Dicke, entsprechend der Länge der Bohrung im Seitenträger bzw. in der Diagonalstrebe auf, was abhängig ist, in welchem Teil der Stehbolzen befestigt ist.

Der Effekt der zusätzlichen Kräfteaufnahme bei einem Heckcrash ist auch gegeben, wenn die Diagonalstreben starr mit dem Seitenträger verbunden sind.

Prinzipiell ist eine starre Befestigung nicht erforderlich, da die Verhakung durch ein Verkeilen während des Crash stattfindet und der Stehbolzen berührungslos im gegenüberstehenden Bauteil angeordnet ist. Aus Vormontagegründen ist mindestens einer der Stehbolzen berührungslos verschraubt.

Ausführungsbeispiele der Erfindung sind in den Zeichnungen dargestellt und werden im folgenden näher beschrieben.

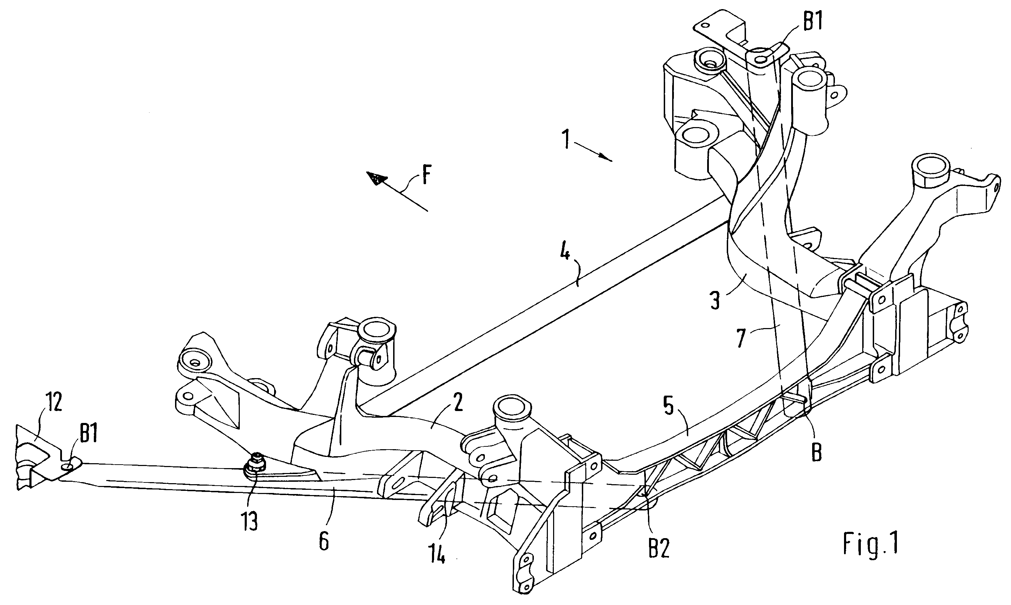

Es zeigen
- Fig. 1: eine schaubildliche Darstellung eines Hinterachs-Fahrschemels mit Diagonalstreben,

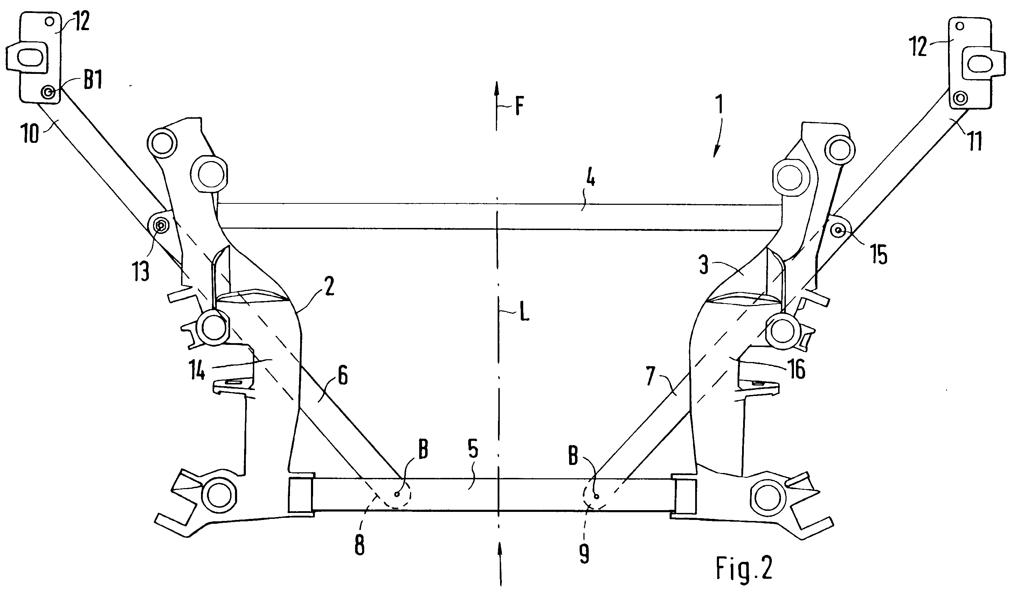

- Fig. 2: eine Draufsicht auf den Fahrschemel mit Diagonalstreben,
- Fig. 3: einen Schnitt durch die Diagonalstrebe nach der Linie III-III der Fig. 2,
- Fig. 3a: einen Teilschnitt durch die Diagonalstrebe mit einer weiteren Ausführung der Stehbolzen in elastischen Hülsen nach der Linie III-III der Fig. 2 und
- Fig. 4: eine weitere Ausführung einer Diagonalstrebe mit Anbindung und einer elastischen Hülse mit Bord im Schnitt.

Ein Fahrschemel 1 für eine Hinterachse eines Kraftfahrzeuges umfaßt zwei Seitenträger 2, 3 und - in bezug auf die Fahrtrichtung F - einen vorderen Querträger 4 und einen hinteren Querträger 5. In Verbindung mit diesem Querträger 5 stehen Diagonalstreben 6, 7, die mit ihrem hintenliegenden freien Ende 8, 9 einerseits im Querträger 5 und mit ihren abgekehrten weiteren freien vornliegenden Ende 10, 11 am Fahrzeugaufbau 12 starr befestigt sind.

Die Diagonalstreben 6, 7 bilden eine V-förmige Anordnung und sind im mittleren Bereich über Stehbolzen 13, 14 und 15, 16 mit den Seitenträgern 2, 3 verbunden. Die Stehbolzen können entweder an den Diagonalstreben 6, 7 oder an den Seitenträgern 2, 3 durch Schweißung befestigt sein.

Die Diagonalstreben 6, 7 bestehen vorzugsweise aus einem im Querschnitt ovalförmigen Rohr, das endseitig zur Befestigung mit dem Querträger 5 sowie mit dem Aufbau 12 abgeflacht ist.

Die hinteren freien Enden 8, 9 der Diagonalstreben 6, 7 sind im Abstand zur Längsmittenachse L des Fahrzeugs angeordnet und verlaufen zu äußeren Längsträgern bzw. Aufbaustrukturen 12 des Fahrzeugs zu vornliegend des Fahrzeugs vorgesehenen Befestigungspunkten B1.

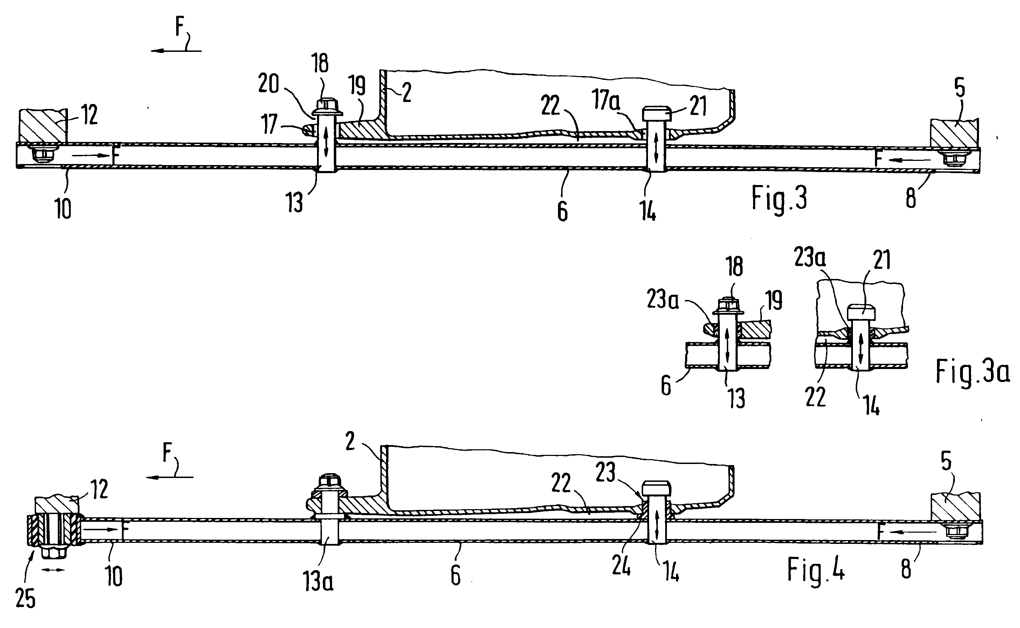

Wie in Fig. 3 näher dargestellt, sind bei diesem Ausführungsbeispiel die Stehbolzen 13, 14 und 15, 16 an den Diagonalstreben 6, 7 befestigt. Der - in bezug auf die Fahrtricht F - vornliegende Stehbolzen 13 bzw. 15 ragt berührungslos in eine Bohrung 17 des Seitenträgers 2 bzw. 3 ein und ist endseitig mit einer Mutter 18 als sogenanntes Fangelement versehen, die zum Flansch 19 des Seitenträgers 2 bzw. 3 einen Freigang 20 zur vertikalen Bewegung aufweist. Der hintenliegende Stehbolzen 14 bzw. 16 ist entsprechend dem vorderen Stehbolzen 13 bzw. 15 angeordnet und weist einen angedrehten Kopf 21 als weiteres Fangelement auf, der ebenfalls einen vertikalen Freigang zur Wandung des Seitenträgers 2, 3 besitzt. Der Kopf 21 weist einen gleichen oder kleineren Durchmesser als die Bohrung 17a auf, damit eine Montage mittels eines Durchsteckens durch die Bohrung 17a in einfacher Weise zur Montage erfolgen kann.

Da die Bohrung für den Stehbolzen 13, 14 bzw. 15, 16 im Seitenträger 6, 7 im Durchmesser größer als der Stehbolzen ist, können Klappergeräusche bei elastischer Bewegung des Fahrschemels 1 auftreten, die durch Einsetzen einer elastischen Hülse 23 bzw. 23a vermieden werden. Die elastische Hülse 23a gemäß Fig. 3a umgibt den Stehbolzen 13, 14 bzw. 15, 16 nur im Bereich der Dicke der Wandung des Seitenträgers 2, 3 bzw. des Flansches 19. Es verbleibt ein Freiraum 22 zwischen der Diagonalstrebe 6, 7 und dem Seitenträger 2, 3. Nach einer weiteren Ausführung gemäß Fig. 4 kann die elastische Hülse 23 mit einem Ringbord 24 versehen sein, der den Freiraum 22 zwischen der Strebe 6, 7 und den Seitenträgern 2, 3 elastisch überbrückt. Möglich ist auch eine Kombination zwischen der Hülse 23 und der Hülse 23a auf den einzelnen Stehbolzen.

Nach einer weiteren Ausführung gemäß Fig. 4 ist die Diagonalstrebe 6, 7 am vorderen Ende 10 bzw. 11 jeweils in einem elastischen Lager 25 abgestützt. Über den vorderen Stehbolzen 13 bzw. 15 erfolgt eine starre Verschraubung der Diagonalstrebe 6, 7 am Seitenträger 2, 3, wogegen der hintenliegende Stehbolzen 14 bzw. 16 entweder berührungslos oder mit einer elastischen Hülse 23 mit Ringbord 24 oder mit einer Hülse 23a ohne Ringbord versehen werden kann, was je nach den örtlichen Gegebenheiten und den möglich elastischen Bewegungen des Fahrschemels erfolgt.

Die elastischen Hülsen 23; 23a auf den Stehbolzen 13, 14 bzw. 15, 16 bewirken bei möglichen elastischen Bewegungen des Fahrschemels 1 eine akustische Abkopplung. Bei einem über Gummilager entkoppelten Fahrschemel 1 kann die Diagonalstrebe 6, 7 über das Gummilager 25 im Befestigungspunkt B1 am freien Ende 10, 11 zusätzlich zum Fahrzeugaufbau entkoppelt werden, um restliche akustische Übertragungen aus dem Fahrwerk weitestgehend zu unterbinden.

Ferner dienen dazu die fest verschraubten Stehbolzen 13a, welche die Knicklänge der Diagonalstreben 2, 3 verkürzen, um eine zusätzliche Versteifung des Fahrschemels 1 zu bewirken.

Auch kann über die Bolzen 14 die Diagonalstrebe 6, 7 fest mit den Seitenträgern 2, 3 verbunden werden.

## Patentansprüche

1. Fahrschemel für eine Hinterradaufhängung eines Kraftfahrzeuges mit Seitenträgern (2, 3) und verbindenden Querträgern (4, 5), wobei die Seitenträger am Fahrzeugaufbau elastisch gehalten sind und jeweils Lagerungen für eine Radaufhängung aufweisen und vor einem Querträger (5) - in bezug auf die Fahrtrichtung - ein Antriebsaggregat beziehungsweise ein Motor des Fahrzeugs angeordnet ist, dadurch gekennzeichnet, daß mit dem einen Querträger (5) des Fahrschemels (1) und dem Fahrzeugaufbau (12) Diagonalstreben (6,7) verbunden und an jeder Fahrzeugseite angeordnet sind und die Streben (6, 7) in Fahrtrichtung (F) einen V-förmigen Verlauf aufweisen und an den Seitenträgern (2, 3) über jeweils mindestens einen Stehbolzen (13, 14 bzw. 15, 16) gehalten sind.

2. Fahrschemel nach Anspruch 1, dadurch gekennzeichnet, daß die Diagonalstreben (6, 7) am Querträger (5) Befestigungspunkte (B) aufweisen, die zu beiden Seiten einer Mittenlängsebene (L) angeordnet sind und die Streben (6, 7) divergierend zu vorderen Befestigungspunkten (B1) am Fahrzeugaufbau (12) verlaufen.

3. Fahrschemel nach den Ansprüchen 1 oder 2, dadurch gekennzeichnet, daß die Diagonalstreben (6,7) über die Stehbolzen (13, 14, 15, 16) mit einem radialen und vertikalen Spiel an den Seitenträgern (2, 3) gehalten sind.

4. Fahrschemel nach Anspruch 1, dadurch gekennzeichnet, daß die Diagonalstreben (6, 7) über die Stehbolzen (13, 14, 15, 16) unter Zwischenschaltung mindestens einer elastischen Hülse (23; 23a) an den Seitenträgern (2, 3) mit vertikalem Spiel gehalten sind.

5. Fahrschemel nach den Ansprüchen 1, 2, 3 oder 4, dadurch gekennzeichnet, daß die Diagonalstreben (6, 7) im vorderen Befestigungspunkt (B1) jeweils in einem elastischen Lager (25) abgestützt sind.

6. Fahrschemel nach Anspruch 1, dadurch gekennzeichnet, daß die Diagonalstreben (6, 7) im vorderen Befestigungspunkt (B1) jeweils in einem elastischen Lager (25) abgestützt sind, ein vorderer Stehbolzen (13, 15) starr und ohne Spiel mit dem Seitenträger (2, 3) verschraubt ist und ein weiterer Stehbolzen (14, 16) über eine elastische Hülse (23; 23a) mit vertikalem Spiel am Seitenträger (2, 3) befestigt ist.

7. Fahrschemel nach einem oder mehreren der vorhergehenden Ansprüche, dadurch gekennzeichnet, daß die Stehbolzen (13, 14, 15, 16) mit ihrem einen Ende jeweils fest mit der Diagonalstrebe (6, 7) verbunden sind und mit ihrem anderen Ende dem Seitenträger (2, 3) zugerichtet sind, und bei jeder Diagonalstrebe ein vornliegender Stehbolzen (13, 15) - in bezug auf die Fahrtrichtung (F) - eine zum Flansch (19) des Seitenträgers (2, 3) beabstandet angeordnete Mutter (18) aufweist und ein hintenliegender Stehbolzen (14, 16) einen mit Abstand zur Wandung des Seitenträgers (2, 3) angeordneten Bolzenkopf (21) besitzt.

8. Fahrschemel nach einem oder mehreren der vorhergehenden Ansprüche, dadurch gekennzeichnet, daß die Stehbolzen (13, 14, 15, 16) am Seitenträger (2, 3) befestigt sind und sich vertikal nach unten zu den Diagonalstreben (6, 7) hin erstrecken.

9. Fahrschemel nach einem oder mehreren der vorhergehenden Ansprüche, dadurch gekennzeichnet, daß die Diagonalstreben (6, 7) berührungslos zur Unterfläche (U) des Seitenträgers (2, 3) angeordnet sind und die Stehbolzen (13, 14, 15, 16) in eine Bohrung (17, 17a) der Seitenträger (2, 3) beziehungsweise der Diagonalstreben (6, 7) hineinragen, welche einen größeren Durchmesser als die Stehbolzen (13, 14, 15, 16) aufweisen.

10. Fahrschemel nach einem oder mehreren der vorhergehenden Ansprüche, dadurch gekennzeichnet, daß die Diagonalstreben (6, 7) über die Stehbolzen (13, 14, 15, 16) fest und spiellos mit den Seitenträgern (2, 3) verbunden sind und als Versteifungs- und/oder Crashstrebe verwendet werden.

## Claims

1. A sub-frame for a rear-wheel suspension of a motor vehicle with lateral supports (2, 3) and connecting transverse supports (4, 5), wherein the lateral supports are held resiliently on the vehicle body and are each provided with respective mountings for a wheel suspension, and a drive unit or an engine of the vehicle is arranged in front of a transverse support (5) with respect to the direction of travel, **characterized in that** diagonal braces (6, 7) are connected to one transverse support (5) of the sub-frame (1) and the vehicle body (12) and are arranged on each side of the vehicle, and the braces (6, 7) have a V-shaped outline in the direction of travel (**F**) and are held on the lateral supports (2, 3) by way of at least one stud bolt (13, 14 and 15, 16 respectively) in each case.

2. A sub-frame according to Claim 1, **characterized in that** the diagonal braces (6, 7) are provided on the transverse support (5) with fastening points (**B**) arranged on both sides of a median longitudinal plane (**L**), and the braces (6, 7) extend diverging towards front fastening points (**B1**) on the vehicle body (12).

3. A sub-frame according to Claim 1 or 2, **characterized in that** the diagonal braces (6, 7) are held with radial and vertical play on the lateral supports (2, 3) by way of the stud bolts (13, 14, 15, 16).

4. A sub-frame according to Claim 1, **characterized in that** the diagonal braces (6, 7) are held with vertical play on the lateral supports (2, 3) by way of the stud bolts (13, 14, 15, 16) with the interposition of at least one resilient sleeve (23; 23a).

5. A sub-frame according to Claim 1, 2, 3 or 4, **characterized in that** the diagonal braces (6, 7) are each supported in one respective resilient bearing (25) at the front fastening point (**B1**).

6. A sub-frame according to Claim 1, **characterized in that** the diagonal braces (6, 7) are each supported in one respective resilient bearing (25) at the front fastening point (**B1**), a front stud bolt (13, 15) is screwed rigidly and without play to the lateral support (2, 3) and a further stud bolt (14, 16) is fastened with vertical play to the lateral support (2, 3) by way of a resilient sleeve (23; 23a).

7. A sub-frame according to one or more of the preceding Claims, **characterized in that** the stud bolts (13, 14, 15, 16) are each rigidly connected at one end thereof to the diagonal brace (6, 7) and face the lateral support (2, 3) at the other end thereof, and in each diagonal brace a stud bolt (13, 15) situated at the front - with respect to the direction of travel (**F**) - is provided with a nut (18) arranged spaced from the flange (19) of the lateral support (2, 3), and a stud bolt (14, 16) situated at the rear has a head (21) arranged spaced from the wall of the lateral support (2, 3).

8. A sub-frame according to one or more of the preceding Claims, **characterized in that** the stud bolts (13, 14, 15, 16) are secured to the lateral support (2, 3) and extend vertically downwards towards the diagonal braces (6, 7).

9. A sub-frame according to one or more of the preceding Claims, **characterized in that** the diagonal braces (6, 7) are arranged without contact with the underside (**U**) of the lateral support (2, 3), and the stud bolts (13, 14, 15, 16) project into a bore (17, 17a) in the lateral supports (2, 3) and in the diagonal braces (6, 7) respectively, the said bores having a larger diameter than the stud bolts (13, 14, 15, 16).

10. A sub-frame according to one or more of the preceding Claims, **characterized in that** the diagonal braces (6, 7) are connected rigidly and without play to the lateral supports (2, 3) by way of the stud bolts (13, 14, 15, 16) and are used as reinforcement and/or crash braces.

## Revendications

1. Faux-châssis pour la suspension d'une roue arrière d'un véhicule automobile comportant des poutres latérales (2, 3), des poutres transversales (4, 5) de liaison, les poutres latérales étant maintenues de manière élastique à la carrosserie du véhicule et comportant chacune des paliers pour la suspension d'une roue et un groupe d'entraînement ou un moteur du véhicule étant disposé devant une poutre transversale - dans le sens de marche -, caractérisé en ce que des entretoises diagonales (6, 7) sont reliées à une poutre transversale (5) du faux-châssis (1) et à la carrosserie (12) du véhicule et sont disposées sur chaque côté du véhicule, et les entretoises (6, 7) présentent un parcours en V dans le sens de marche (F) et sont maintenues sur les poutres latérales (2, 3), chacune par au moins un boulon vertical respectivement (13, 14 et 15, 16).

2. Faux-châssis selon la revendication 1, caractérisé en ce que les entretoises diagonales (6, 7) présentent sur la poutre transversale (5) des coins de fixation (B), qui sont disposés des deux côtés d'un plan longitudinal médian (L) et en ce que les entretoises (6, 7) s'étendent de manière divergente vers les points de fixation avant (B1) sur la carrosserie (12) du véhicule.

3. Faux-châssis selon les revendications 1 ou 2, caractérisé en ce que les entretoises diagonales (6, 7) sont maintenues, par les boulons verticaux (13, 14, 15, 16), sur les poutres latérales (2, 3) avec un jeu radial et un jeu vertical.

4. Faux-châssis selon la revendication 1, caractérisé en ce que les entretoises diagonales (6, 7) sont maintenues, par les boulons verticaux (13, 14, 15, 16), sur les poutres latérales (2, 3), avec un jeu vertical, par interposition d'au moins une douille élastique (23 ; 23a).

5. Faux-châssis selon les revendications 1, 2, 3 ou 4, caractérisé en ce que les entretoises diagonales (6, 7) sont soutenues dans le point de fixation avant (B1), chacune dans un palier élastique (25).

6. Faux-châssis selon la revendication 1, caractérisé en ce que les entretoises diagonales (6, 7) sont soutenues dans le point de fixation avant (B1), chacune dans un palier élastique (25), et un boulon vertical avant (13, 14) est vissé rigidement et sans jeu avec la poutre latérale (2, 3), et un autre boulon vertical (14, 16) est fixé avec un jeu vertical, à la poutre latérale (2, 3) par l'intermédiaire d'une douille élastique (23 ; 23a).

7. Faux-châssis selon une ou plusieurs des revendications précédentes, caractérisé en ce que les boulons verticaux (13, 14, 15, 16) sont reliés fixement chacun par l'une de leurs extrémités à l'entretoise diagonale (6, 7) et par leur autre extrémité ils sont orientés vers la poutre latérale (2, 3) et pour chaque entretoise diagonale, un boulon vertical (13, 15) situé à l'avant - par rapport au sens de marche (F) - présente un écrou (18) disposé à distance de la bride (19) de la poutre latérale (2, 3), et un boulon vertical (14, 16) situé à l'arrière possède une tête (21) disposée à distance de la paroi de la poutre latérale (2, 3).

8. Faux-châssis selon une ou plusieurs des revendications précédentes, caractérisé en ce que les boulons verticaux (13, 14, 15, 16) sont fixés à la poutre latérale (2, 3) et s'étendent verticalement vers le bas, vers les entretoises diagonales (6, 7).

9. Faux-châssis selon une ou plusieurs des revendications précédentes, caractérisé en ce que les entretoises diagonales (6, 7) sont disposées sans contact avec la face inférieure (U) de la poutre latérale (2, 3) et des boulons verticaux (13, 14, 15, 16) pénètrent dans un perçage (17, 17a) des poutres latérales (2, 3) respectivement des entretoises diagonales (6, 7), qui présentent un plus grand diamètre que les boulons verticaux (13, 14, 15, 16).

10. Faux-châssis selon une ou plusieurs des revendications précédentes, caractérisé en ce que les entretoises diagonales (6, 7) sont reliées fixement et sans jeu aux poutres latérales (2, 3), par l'intermédiaire des boulons verticaux (13, 14, 15, 16) et sont utilisées comme raidisseurs et/ou entretoises de collision.
